# EUROPEAN PATENT APPLICATION

(11) **EP 4 803 863 A1**
(43) Date of publication of application: **09.09.2026**
(21) Application number: 25162104.1
(22) Date of filing: 06.03.2025
(51) Int. Cl.: G01F 23/284, H01Q 1/22, G01S 13/88

(54) **RADAR LEVEL GAUGE SYSTEM WITH TEMPERATURE RESISTANT MICROWAVE ABSORBER ARRANGEMENT**

(71) Applicant: Rosemount Tank Radar AB, 435 23 Mölnlycke (SE)
(72) Inventor: FREDRIKSSON, Håkan, 589 51 Linköping (SE); OHLSSON, Magnus, 610 21 Norsholm (SE)
(74) Representative: Kransell & Wennborg KB

(57) **Abstract**

A radar level gauge system (1) for determining a filling level (L) of a product (9) in a tank (3) under high-temperature conditions comprises a transceiver (11) for generating, transmitting, and receiving microwave signals, a lens antenna (23) arranged along a signal path (35) of an electromagnetic transmit signal (ST) from the transceiver (11), the lens antenna (23) being configured to direct the transmit signal (ST) towards a surface (21) of the product (9) in the tank (3) and to direct an electromagnetic reflection signal (SR) resulting from reflection of the transmit signal (ST) at the surface (21) of the product (9) in the tank (3) back towards the transceiver (11), a microwave absorber arrangement (31) at least partly surrounding the signal path (35) of the transmit signal (ST), the microwave absorber arrangement (31) comprising a carrier (41) and a heat-resistant microwave absorber material (43) supported by the carrier (41), and processing circuitry (15) coupled to the transceiver (11) and configured to determine the filling level (L) based on a timing relation between the transmit signal (ST) and the reflection signal (SR).

## Description

### Technical Field of the Invention

The present invention relates to a radar level gauge system, and to a manufacturing method.

### Technical Background

Radar level gauge (RLG) systems are in wide use for determining filling levels in tanks. Radar level gauging is generally performed either by means of non-contact measurement, whereby electromagnetic signals are radiated towards the product in the tank, or by means of contact measurement, often referred to as guided wave radar (GWR), whereby electromagnetic signals are guided towards and into the product by a probe. The probe is generally arranged to extend vertically from the top towards the bottom of the tank.

An electromagnetic transmit signal is generated by a transceiver and propagated towards the surface of the product in the tank, and an electromagnetic reflection signal resulting from reflection of the transmit signal at the surface is propagated back towards to the transceiver.

Based on a timing relation between the transmit signal and the reflection signal, the distance to the surface of the product can be determined.

For some applications, such as for non-contact radar level gauge systems using microwave signals in a relatively high frequency band, an antenna assembly including a lens antenna may advantageously be used.

High-frequency non-contact radar level gauge measurement provides several advantages, such as a narrower measurement beam and more compact dimensions. The latter in particular allows for installation of the radar level gauge system in various tanks where pre-existing openings may be too small for conventional non-contact radar level gauge systems with lower frequencies, such as around 26 GHz or less.

For high-temperature (HT) or high-temperature high-pressure (HTHP) applications, the use of radar level gauge systems of the GWR type is currently favored. Although typically well-suited, radar level gauge systems of the GWR type have their limitations. For instance, applications where violent fluid movement can be expected to occur require special considerations.

It would be desirable to provide for use of high-frequency non-contact radar level gauge systems also for high-temperature applications.

### Summary

In view of the above, a general object of the present invention is to provide for use of high-frequency non-contact radar level gauge systems for high-temperature applications.

According to a first aspect of the present invention, it is therefore provided a radar level gauge system for determining a filling level of a product in a tank under high-temperature conditions, the radar level gauge system comprising: a transceiver for generating, transmitting and receiving microwave signals; a lens antenna arranged along a signal path of an electromagnetic transmit signal from the transceiver, the lens antenna being configured to direct the transmit signal towards a surface of the product in the tank, and to direct an electromagnetic reflection signal resulting from reflection of the transmit signal at the surface of the product in the tank back towards the transceiver; a microwave absorber arrangement at least partly surrounding the signal path of the transmit signal, the microwave absorber arrangement comprising a carrier and a heat-resistant microwave absorber material supported by the carrier; and processing circuitry coupled to the transceiver and configured to determine the filling level based on a timing relation between the transmit signal and the reflection signal.

In existing radar level gauge systems including a lens antenna, a microwave absorber arrangement may be provided for suppressing side lobes to thereby improving, for example, the directivity of the lens antenna and/or a near-zone performance of the radar level gauge system. The present invention is based on the realization that one of the main obstacles to overcome for adapting a high-frequency non-contact radar level gauge system for high-temperature applications is that existing microwave absorber arrangements cannot withstand the high temperatures (such as higher than 400°C) that may result from use in a high-temperature application.

The present inventors have further realized that a microwave absorber arrangement capable of withstanding elevated temperatures can be formed by a heat-resistant carrier supporting a heat-resistant microwave absorber material. The carrier may advantageously be a ceramic material, known for its high thermal stability and low thermal expansion. Alternatively, metals with low coefficients of thermal expansion, such as Invar or Kovar alloys, could be utilized. Invar, an iron-nickel alloy, and Kovar, an iron-nickel-cobalt alloy, are both recognized for their dimensional stability under temperature fluctuations, making them suitable for high-temperature applications.

This configuration of the microwave absorber arrangement opens up for use of heat-resistant microwave absorber materials which would, without the support by the carrier, at best, result in a very fragile microwave absorber arrangement, that would make the radar level gauge system difficult to assemble and less resistant to handling.

Furthermore, the use of a carrier not only enables the integration of heat-resistant microwave absorber materials but also provides mechanical stability and durability in demanding industrial environments. By structurally reinforcing the microwave absorber material, the carrier reduces the risk of cracking, detachment, or degradation over time, thereby improving the long-term reliability of the radar level gauge system. Additionally, this configuration allows for precise positioning of the absorber material, ensuring consistent suppression of side lobes and optimized antenna performance across a wide range of operating temperatures.

In an example of the radar level gauge system according to the present invention, the microwave absorber arrangement may surround the signal path of the transmit signal along an arc angle of at least 300°. The microwave absorber arrangement may completely surround the signal path, but in some configurations, it may instead extend around a substantial portion of the signal path while leaving an open section to accommodate structural or assembly constraints.

In either case, the microwave absorber material may be present along at least the specified arc angle to provide effective suppression of side lobes and reduction of unwanted reflections. This configuration may allow for flexibility in implementation while maintaining reliable performance in high-temperature environments.

In an example of the radar level gauge system according to the present invention, the carrier may comprise a non-uniform surface structure for structurally reinforcing the heat-resistant microwave absorber material. By providing a non-uniform surface, mechanical interlocking between the carrier and the microwave absorber material may be improved, reducing the risk of detachment or degradation over time.

Thermal expansion differences between the carrier and the microwave absorber material may result in mechanical stress, particularly in high-temperature environments. The non-uniform surface structure may help manage such stress by improving adhesion and providing additional mechanical anchoring, thereby enhancing the durability of the microwave absorber arrangement.

In an example of the radar level gauge system according to the present invention, the carrier may exhibit a cage-like structure, with openings between an inside of the carrier facing the signal path of the transmit signal and an outside of the carrier facing away from the signal path. The heat-resistant microwave absorber material may at least partly fill the openings of the carrier. This configuration may provide structural reinforcement for the microwave absorber material while allowing for a reduced material volume in the carrier. Reducing the material volume may lower the weight of the carrier, improve material efficiency in manufacturing, and help reduce internal stresses caused by thermal expansion mismatches between the carrier and the microwave absorber material.

In an example of the radar level gauge system according to the present invention, the heat-resistant microwave absorber material may completely fill the openings of the carrier. This configuration may maximize microwave absorption while ensuring uniform mechanical support for the absorber material, reducing the risk of detachment or degradation over time.

In an example of the radar level gauge system according to the present invention, the openings of the carrier may be rounded. This configuration may reduce stress concentrations in the carrier, providing for improved mechanical strength and resistance to thermal cycling. It may also facilitate manufacturing, particularly in additive manufacturing processes, and provide for a more uniform distribution of the heat-resistant microwave absorber material within the openings.

In an example of the radar level gauge system according to the present invention, the carrier may be made of a ceramic material. This configuration may provide for high-temperature resistance and mechanical stability, allowing the carrier to maintain its structural integrity under thermal cycling and prolonged exposure to elevated temperatures. Suitable ceramic materials may include alumina, which offers thermal stability and mechanical strength, silicon carbide, which provides for high thermal conductivity and low thermal expansion, and yttria-stabilized zirconia, which exhibits high fracture toughness and thermal resistance.

The ceramic carrier may be fabricated using additive manufacturing techniques, such as robocasting. In this process, a ceramic slurry with a high concentration of ceramic particles relative to the liquid binder may be extruded through a nozzle to build the desired structure layer by layer. The high particle loading in the slurry may provide for minimal shrinkage and deformation during drying and sintering, resulting in a dense and mechanically robust ceramic component. After printing, the structure may undergo a drying phase, followed by sintering at elevated temperatures to achieve the final material properties. This method may allow for the creation of complex geometries, including cage-like structures with precise control over the internal architecture. By utilizing 3D printing techniques, the carrier's design may be optimized for both performance and material efficiency, providing for tailored solutions for specific high-temperature radar level gauging applications.

In an example of the radar level gauge system according to the present invention, the heat-resistant microwave absorber material may contain carbon or iron. This configuration may provide for effective attenuation of unwanted microwave signals, as both carbon-based and iron-based materials may exhibit strong microwave absorption properties.

One example of a microwave absorber material, containing both carbon and iron, is carbonyl iron, which consists of spherical microparticles with high purity. However, the skilled person will be aware of alternative materials that may be used depending on the specific absorption characteristics required for a given application.

In an example of the radar level gauge system according to the present invention, the heat-resistant microwave absorber material may be a thermally curable composite. This configuration may provide for beneficial mechanical stability and adhesion to the carrier after curing, allowing the microwave absorber material to maintain its shape and position under high-temperature conditions. By using a thermally curable composite, the absorber material may be applied in a moldable or flowable state and subsequently hardened through thermal curing.

Suitable thermally curable composites may include materials such as black fire cement, which contains quartz and sodium silicate and may withstand temperatures of at least 1100°C. Other possible materials may include silicate-based refractory cements or ceramic pastes that, when cured, provide a durable, high-temperature-resistant structure. These materials may be applied in a paste-like form and, in cases where the carrier comprises openings, may be used to fill these openings before curing to form a mechanically stable absorber arrangement.

In an example of the radar level gauge system according to the present invention, the ceramic carrier may be selected to have a coefficient of thermal expansion (CTE) within approximately 20% of that of the heat-resistant microwave absorber material. For instance, black fire cement, which contains quartz and sodium silicate, may exhibit a CTE in the range of 7 to 13 × 10⁻⁶/°C. A suitable carrier material in this context may be alumina, with a CTE of approximately 8.1 × 10⁻⁶/°C. This combination may provide for reduced thermal stresses at the interface between the carrier and the microwave absorber material, allowing for improved durability and mechanical stability of the microwave absorber arrangement in high-temperature environments. The skilled person will be aware of alternative material combinations that may provide similar benefits.

In an example of the radar level gauge system according to the present invention, the radar level gauge system may comprise a hollow waveguide connecting the transceiver and the lens antenna, with the microwave absorber arrangement arranged inside the hollow waveguide. This configuration may provide for attenuation of unwanted microwave reflections within the waveguide, reducing interference and improving signal integrity.

As an alternative or complement, the microwave absorber arrangement may at least partly surround the lens antenna. This configuration may provide for further attenuation of unwanted microwave radiation around the antenna, reducing side lobes and minimizing interference from reflections within the system. By selecting a suitable placement of the microwave absorber arrangement, the system may provide for improved directivity and more accurate level measurements.

In an example of the radar level gauge system according to the present invention, the lens antenna may be made of a non-plastic dielectric. This configuration may provide for high-temperature resistance, allowing the antenna to maintain its shape and functionality when subjected to elevated process temperatures.

Suitable materials may include ceramics, such as alumina or machinable ceramics like Macor^{®}, as well as high-temperature glass materials like fused quartz. These materials may exhibit both mechanical stability and dielectric properties suitable for microwave transmission, making them well-suited for use in radar level gauge systems operating in demanding environments.

According to a second aspect of the present invention, it is provided a method of manufacturing a microwave absorber arrangement for a radar level gauge system, the method comprising: providing a carrier; arranging a paste including a microwave absorbing component and a refractory binder on the carrier; and curing the paste.

The present inventors have realized that by applying the microwave absorber material in a paste-like form before curing, the absorber material may conform to the structure of the carrier, allowing for a strong mechanical bond and a uniform distribution. This method may be particularly beneficial when the carrier comprises a non-uniform surface structure, as the paste may flow into surface variations or openings before hardening, providing for a mechanically stable absorber arrangement.

### Brief Description of the Drawings

These and other aspects of the present invention will now be described in more detail, with reference to the appended drawings showing example embodiments of the invention, wherein:
Fig 1 schematically shows a radar level gauge system according to an example embodiment of the present invention in an exemplary HTHP-application;
Fig 2 is a block diagram schematically illustrating the radar level gauge system in fig 1;
Fig 3A is a schematic cross-section view of a first example of an antenna assembly configuration that may be comprised in the radar level gauge system in fig 2;
Fig 3B schematically shows an example of a microwave absorber arrangement that may be comprised in the antenna assembly configuration in fig 3A;
Fig 4A is a schematic cross-section view of a second example of an antenna assembly configuration that may be comprised in the radar level gauge system in fig 2;
Fig 4B schematically shows an example of a microwave absorber arrangement that may be comprised in the antenna assembly configuration in fig 4A; and
Fig 5 is an example of a manufacturing method according to the invention.

### Detailed Description of Example Embodiments of the Invention

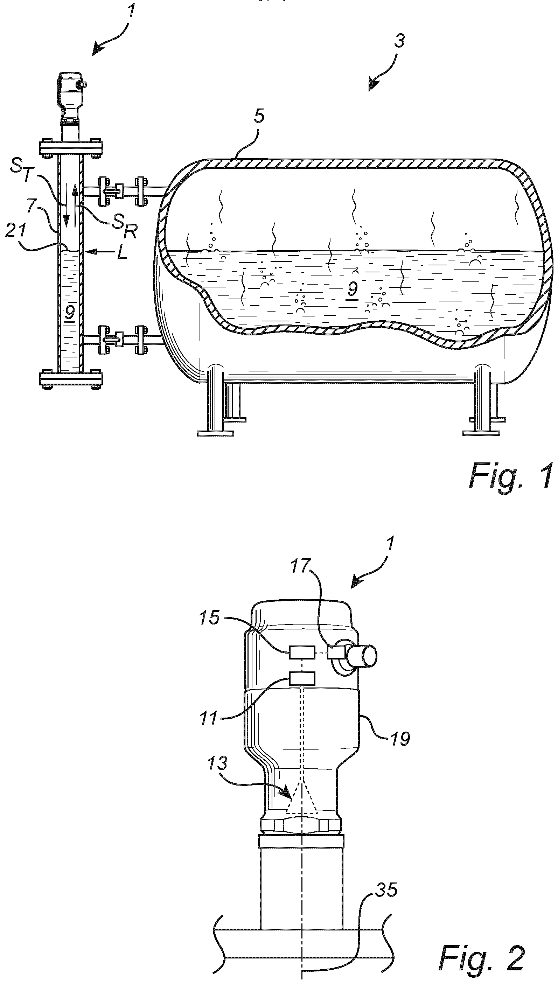

Fig. 1 schematically shows a radar level gauge system 1 according to an example embodiment of the present invention in an exemplary high-temperature high-pressure (HTHP) application. In the example illustrated in Fig. 1, the HTHP application is a simplified boiler 3, with a boiler drum 5 and a chamber 7 (often also referred to as a bridle). The boiler drum 5 is in fluid communication with the chamber 7 so that the level L of a product 9 in the chamber 7 corresponds to the level in the boiler drum 5. Thus, the boiler drum 5 and the chamber 7 together form a tank, and the opening at the top of the chamber 7 is an opening in the tank wall. The radar level gauge system 1 according to examples of the present invention would also be suitable for other applications, such as for measuring the level of a solid at a grate cooler in a cement plant. This latter application does not involve high pressure, but is an example of a pure high-temperature (HT) application.

With reference to Fig. 2, the radar level gauge system 1 in Fig. 1 comprises a transceiver 11, an antenna arrangement 13, processing circuitry 15, and a communication interface 17 inside a housing 19. The transceiver 11 is configured to generate, transmit, and receive microwave signals. The antenna arrangement 13 is arranged along a signal path 35 of an electromagnetic transmit signal S_{T} from the transceiver 11 and is configured to direct the transmit signal S_{T} towards a surface 21 of the product 9 in the tank 3 and to direct an electromagnetic reflection signal S_{R}, resulting from reflection of the transmit signal S_{T} at the surface 21 of the product 9, back towards the transceiver 11. The processing circuitry 15 is coupled to the transceiver 11 and may be configured to determine the filling level L based on a timing relation between the transmit signal S_{T} and the reflection signal S_{R} using *per se* known techniques. The determined filling level L may be communicated to a remote host using the communication interface 17, which may be any suitable wired or wireless communication interface known in the art. It should be noted that the opening in the tank wall may alternatively be provided in the wall of the boiler drum 5 and that the antenna arrangement 13 may be arranged at such an opening to measure the level L in the boiler drum 5 directly. In such a configuration, there may be a ball valve between the interior of the boiler drum 5 and the antenna arrangement 13.

The antenna arrangement 13 included in the radar level gauge system 1 in Fig. 2 is suitable both for the high frequency of the transmitted and received signals and for the particular challenges associated with HTHP applications, especially the high temperature. An HTHP application may be classified as an application where the antenna arrangement 13 may be subjected to a pressure of up to 400 bar and a temperature of up to 450°C. Such severe process conditions lead to requirements on the mechanical integrity of the components included in the antenna arrangement 13, even for very high temperatures.

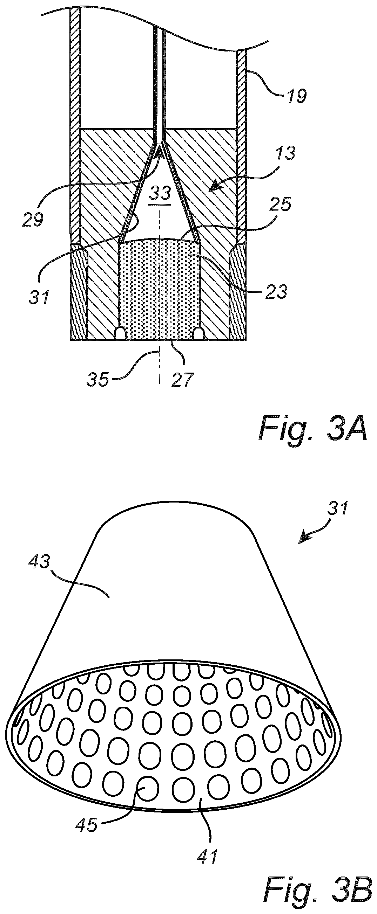

For this reason, initially referring to the first example configuration in Fig. 3A, the radar level gauge system 1 comprises a heat-resistant microwave absorber arrangement 31 configured to suppress unwanted microwave radiation. The microwave absorber arrangement 31 may be arranged inside a hollow waveguide 33 connecting the transceiver 11 and the antenna arrangement 13. The microwave absorber arrangement 31 may enclose at least part of a space defined by the hollow waveguide 33 and may include a heat-resistant microwave absorber material.

The antenna arrangement 13 in Fig. 3A may further comprise a lens antenna 23 arranged along the signal path 35 of the electromagnetic transmit signal S_{T} from the transceiver 11. The lens antenna 23 may be configured to direct the transmit signal S_{T} towards the surface 21 of the product 9 in the tank 3 and to direct the reflection signal S_{R}, resulting from reflection of the transmit signal ST at the surface 21 of the product 9, back towards the transceiver 11. The lens antenna 23 may be made of a non-plastic dielectric material and may have an inner surface 25 configured to receive the transmit signal S_{T} and an outer surface 27 configured to emit the transmit signal S_{T} and receive the reflection signal S_{R}, when the lens antenna 23 is arranged at the opening in the tank wall, as shown in Fig. 1. The antenna arrangement 13 may further comprise a feed 29 arranged to direct the transmit signal S_{T} towards the inner surface 25 of the lens antenna 23.

In the example configuration of Fig. 3A, the microwave absorber arrangement 31 may be arranged inside the hollow waveguide connecting the transceiver 11 and the lens antenna 23. This configuration may provide for attenuation of unwanted microwave reflections within the waveguide, reducing interference and improving signal integrity. The microwave absorber arrangement 31 may be formed using a heat-resistant microwave absorber material supported by a carrier, which may be a ceramic structure. This will be described in greater detail below, with reference to Fig. 3B.

The lens antenna 23 may advantageously be made of a suitable ceramic or glass. Examples of suitable ceramics may include alumina or machinable ceramics such as Macor^{®}. Alternatively, a suitable high-temperature glass material, such as fused quartz, may be used.

In an exemplary configuration of the lens antenna 23 in Fig. 3A, the inner surface 25 of the lens antenna 23 may be shaped to focus the transmit signal ST from the feed 29 to a plane wave propagating inside the lens antenna 23 towards the outer surface 27. In this configuration, the wavefronts of the plane wave may be parallel to the outer surface 27, so that the transmit signal ST is not refracted at the interface between the lens antenna 23 and the atmosphere inside the tank 3.

Fig. 3B schematically shows an example of a microwave absorber arrangement 31 that may be comprised in the antenna arrangement 13 in Fig. 3A. In this example configuration, the microwave absorber arrangement 31 is conical and dimensioned to fit inside the conical or horn-shaped hollow waveguide in Fig. 3A. In Fig. 3B, the carrier 41 is visible on the inside of the microwave absorber arrangement 31, while the outside is fully covered by the heat-resistant microwave absorber material 43. In the particular example shown in Fig. 3B, the carrier 41 has a non-uniform surface structure, in particular exhibiting a cage-like structure with openings 45 between an inside of the carrier 41 facing the signal path 35 of the transmit signal S_{T} and an outside of the carrier 41 facing away from the signal path 35 of the transmit signal S_{T}. The openings 45 may be rounded, as shown in Fig. 3B.

The configuration of the microwave absorber arrangement 31 in Fig. 3B may provide for structural reinforcement of the heat-resistant microwave absorber material 43. The cage-like structure of the carrier 41 may improve mechanical stability and durability by providing mechanical anchoring for the heat-resistant microwave absorber material 43, reducing the risk of detachment or degradation over time. Additionally, the openings 45 in the carrier 41 may allow a sufficient fraction of the total surface of the microwave absorber arrangement 31 to efficiently absorb microwaves, while at the same time providing for structural reinforcement. The inside of the microwave absorber arrangement 31 may be fully coated by the heat-resistant microwave absorber material 43, which may be beneficial for microwave absorption performance.

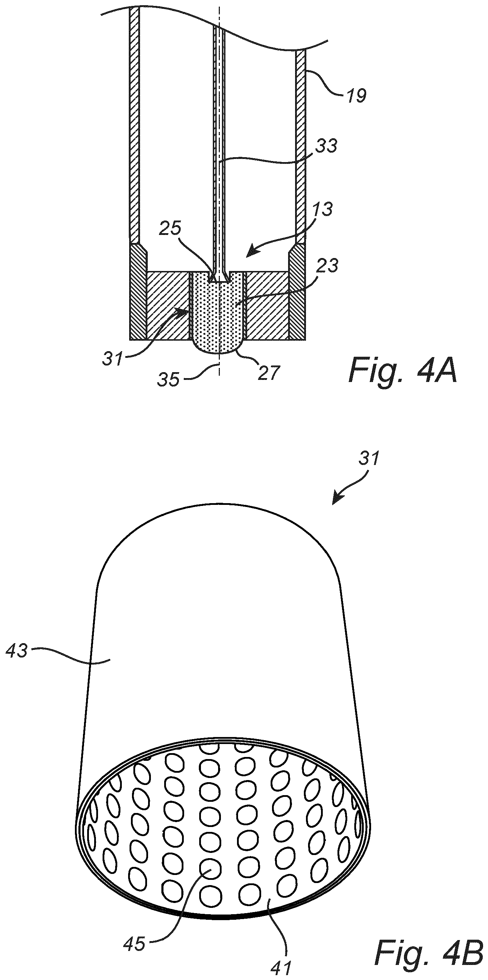

Fig. 4A schematically shows another example configuration of an antenna arrangement 13 that may be comprised in the radar level gauge system 1. In this example, the lens antenna 23 has a flat inner surface 25 and a convex outer surface 27. The inner surface 25 is positioned at the bottom of a cup-shaped indent formed in the lens antenna 23. The hollow waveguide 33 terminates at the inner surface 25 at the bottom of the cup-shaped indent, providing for the transmission of the transmit signal S_{T} into the lens antenna 23. The microwave absorber arrangement 31 is configured as a substantially cylindrical shell and is arranged to surround the lens antenna 23.

Fig. 4B schematically shows an example of a microwave absorber arrangement 31 that may be comprised in the antenna arrangement 13 in Fig. 4A. In this example configuration, the microwave absorber arrangement 31 is cylindrical and dimensioned to surround the lens antenna 23. In Fig. 4B, the carrier 41 is visible on the inside of the microwave absorber arrangement 31, while the outside is fully covered by the heat-resistant microwave absorber material 43. In the particular example shown in Fig. 4B, the carrier 41 has a non-uniform surface structure, in particular exhibiting a cage-like structure with openings 45 between an inside of the carrier 41 facing the signal path 35 of the transmit signal S_{T} and an outside of the carrier 41 facing away from the signal path 35 of the transmit signal S_{T}. The openings 45 may be rounded, as shown in Fig. 4B.

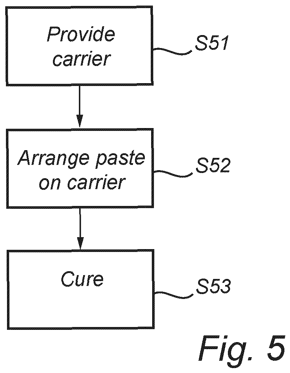

Fig. 5 schematically illustrates an example of a manufacturing method for a microwave absorber arrangement 31 according to the present invention. The method comprises providing S51 a carrier 41.

The carrier 41 may be pre-formed, or providing S51 the carrier 41 may include forming the carrier 41. In an example, the carrier 41 may be a ceramic structure formed using 3D-printing techniques. One example of such a technique is robocasting, in which a ceramic slurry with a high concentration of ceramic particles relative to the liquid binder may be extruded through a nozzle to build the desired structure layer by layer. The high particle loading in the slurry may provide for minimal shrinkage and deformation during drying and sintering, resulting in a dense and mechanically robust ceramic component. After printing, the structure may undergo a drying phase, followed by sintering at elevated temperatures to achieve the final material properties. In some examples, the carrier 41 may comprise a non-uniform surface structure, such as a cage-like arrangement with openings 45.

The method in Fig. 5 proceeds with arranging S52 a paste 43 including a microwave absorbing component and a refractory binder on the carrier 41. The paste 43 may be applied in a moldable or flowable state, using methods such as brushing, spraying, dipping, or casting, depending on the consistency of the paste 43 and the structure of the carrier 41. In examples where the carrier 41 comprises openings 45, the paste 43 may at least partly fill these openings. The paste 43 may have been prepared by combining the microwave-absorbing component with a refractory binder and a liquid medium, such as water, to achieve a workable consistency. The refractory binder may serve to gel the materials together in the applied state, ensuring cohesion before further processing.

The method in Fig. 5 proceeds with curing S53 the paste 43. Curing S53 the paste 43 may include subjecting the applied paste 43 to a thermal curing process to achieve a mechanically stable and thermally resistant structure. Depending on the composition of the paste 43, the curing process may involve drying, dehydration, volatilization of binders, and/or sintering at elevated temperatures. The curing conditions may be selected to allow the refractory binder to solidify while maintaining the microwave absorption properties of the microwave-absorbing component.

The person skilled in the art realizes that the present invention by no means is limited to the embodiments described above. On the contrary, many modifications and variations are possible within the scope of the appended claims. For example, the microwave absorber arrangement may have alternative geometries or configurations, and different materials may be used for the carrier and the heat-resistant microwave absorber material depending on specific application requirements.

## Claims

1. A radar level gauge system (1) for determining a filling level (L) of a product (9) in a tank (5) under high-temperature conditions, the radar level gauge system (1) comprising:
a transceiver (11) for generating, transmitting and receiving microwave signals;
a lens antenna (23) arranged along a signal path (35) of an electromagnetic transmit signal (S_{T}) from the transceiver (11), the lens antenna (23) being configured to direct the transmit signal (S_{T}) towards a surface (21) of the product (9) in the tank (5), and to direct an electromagnetic reflection signal (S_{R}) resulting from reflection of the transmit signal (S_{T}) at the surface (21) of the product (9) in the tank (5) back towards the transceiver (11);
a microwave absorber arrangement (31) at least partly surrounding the signal path (35) of the transmit signal (S_{T}), the microwave absorber arrangement (31) comprising a carrier (41) and a heat-resistant microwave absorber material (43) supported by the carrier (41); and
processing circuitry (15) coupled to the transceiver (11) and configured to determine the filling level (L) based on a timing relation between the transmit signal (S_{T}) and the reflection signal (S_{R}).

2. The radar level gauge system (1) according to claim 1, the microwave absorber arrangement (31) surrounding the signal path (35) of the transmit signal (S_{T}) along an arc angle of at least 300°.

3. The radar level gauge system (1) according to claim 1 or 2, the carrier (41) comprising a non-uniform surface structure for structurally reinforcing the heat-resistant microwave absorber material (43).

4. The radar level gauge system (1) according to claim 3,
the carrier (41) exhibiting a cage-like structure, with openings (45) between an inside of the carrier (41) facing the signal path (35) of the transmit signal (S_{T}) and an outside of the carrier (41) facing away from the signal path (35) of the transmit signal (S_{T}); and
the heat-resistant microwave absorber material (43) at least partly filling the openings (45) of the carrier (41).

5. The radar level gauge system (1) according to claim 4, the heat-resistant microwave absorber material (43) completely filling the openings (45) of the carrier (41).

6. The radar level gauge system (1) according to claim 4 or 5, the openings (45) of the carrier (41) being rounded.

7. The radar level gauge system (1) according to any one of the preceding claims, the carrier (41) being made of a ceramic material.

8. The radar level gauge system (1) according to any one of the preceding claims, the heat-resistant microwave absorber material (43) containing carbon or iron.

9. The radar level gauge system (1) according to any one of the preceding claims, the heat-resistant microwave absorber material (43) being a thermally curable composite.

10. The radar level gauge system (1) according to claim 9, the heat-resistant microwave absorber material (43) comprising a refractory binder.

11. The radar level gauge system (1) according to any one of the preceding claims:
the radar level gauge system (1) comprising a hollow waveguide (33) connecting the transceiver (11) and the lens antenna (23); and
the microwave absorber arrangement (31) being arranged inside the hollow waveguide (33).

12. The radar level gauge system (1) according to any one of the preceding claims, the microwave absorber arrangement (31) at least partly surrounding the lens antenna (23).

13. The radar level gauge system (1) according to any one of the preceding claims, the lens antenna (23) being made of a non-plastic dielectric.

14. The radar level gauge system (1) according to any one of the preceding claims, the lens antenna (23) being configured to converge the transmit signal (S_{T}).

15. A method of manufacturing a microwave absorber arrangement (31) for the radar level gauge system (1) according to any one of claims 1-14, comprising:
providing (S51) a carrier (41);
arranging (S52) a paste (43) including a microwave absorbing component and a refractory binder on the carrier (41); and
curing (S53) the paste (43).
